# EUROPEAN PATENT SPECIFICATION

(11) **EP 1 775 728 B1**
(45) Date of publication and mention of the grant of the patent: **15.12.2010**
(21) Application number: 06021224.8
(22) Date of filing: 10.10.2006
(51) Int. Cl.: G11B 23/107, G11B 23/04

(54) **Recording tape cartridge**
Aufzeichnungsbandkassette
Cassette à bande d'enregistrement

(30) Priority: 11.10.2005 JP 2005296796
(43) Date of publication of application: 18.04.2007
(73) Proprietor: Fujifilm Corporation, Minato-ku Tokyo (JP)
(72) Inventor: Shiga, Hideaki c/oFujifilm Corporation, Odawara-shi Kanagawa (JP)
(74) Representative: Klunker . Schmitt-Nilson . Hirsch

(56) References cited:
- EP-A- 1 115 115
- JP-A- 7 312 061
- JP-A- 9 161 441
- JP-A- 55 135 356
- JP-A- 60 005 484
- JP-A- 60 202 588
- US-A1- 2003 001 037
- US-B1- 6 508 750

## Description

### BACKGROUND

### Technical Field

The present present invention relates to a recording tape cartridge according to the preamble of claim 1. Such cartridge is used as a recording/reproducing medium mainly of computers or the like, and in which a recording tape, such as a magnetic tape, is accommodated within a case.

### Related Art

There are known recording tape cartridges in which a recording tape, such as a magnetic tape, is wound on a reel (reel hub) and the single reel is accommodated within a case in the related art. The recording tape cartridge is used as a data recording/reproducing medium of computers or the like. When the recording tape cartridge is loaded into a drive device, the recording tape is pulled-out from an opening via a leader member. The pulled-out recording tape is taken-up onto a take-up reel that is disposed at the opposite side of the recording tape cartridge, with tape guides and a recording/reproducing head of the drive device therebetween.

Recording/reproducing systems (drive devices), which use recent recording tape cartridges with improved recording density, are mainly of a type in which, on the basis of servo signals which are recorded in advance on the recording tape, the recording/reproducing head is moved in the vertical direction by an actuator so as to make the recording/reproducing head follow the servo signals, and data signals are recorded. Accordingly, it is desirable that the recording tape, which has been pulled-out from the recording tape cartridge, is supported by a plurality of tape guides within the drive device, and that control is carried out so that the recording tape always travels a predetermined position of the recording/reproducing head.

As examples of tape guiding systems within a drive device, there are a system in which a cylindrical-shaped member rotates and regulating portions (flanges) are formed at both ends of the member, and a system in which a similar cylinder-shaped member or a block-shaped member is disposed so as to be fixed disclosed in Japanese Patent Application Laid-Open (JP-A) No. 2004-362755, as well as a system in which a block-shaped member, which jets-out air and actively causes the recording tape to rise up, is disposed so as to be fixed disclosed in Japanese Patent Application National Publication (Laid-Open) No. 9-511352, and the like.

However it is difficult to provide the reel within the recording tape cartridge and the reel hub of the take-up reel within the drive device so as to be absolutely straight. It is also difficult to straightly assemble and operate the tape guides and motors that rotate the respective reels. Therefore, even if the recording tape is supported by the tape guides, the recording tape fluctuates in the width direction (the vertical direction) while traveling.

In cases in which these fluctuations are marked, and, in particular, in cases in which the recording tape fluctuates in a short time period (when acceleration is high), it may be difficult for the recording/reproducing head, which moves in the vertical direction on the basis of the servo signals on the recording tape, to record or reproduce the desired data signals because the recording/reproducing head can't follow these sudden positional fluctuations of the recording tape.

Further, in recent recording/reproducing systems having high recording density, the size of the servo signals is made to be small, the recording density of the servo signals themselves is increased, and the traveling speed of the recording tape is made to be faster. Therefore, recording/reproducing errors of the data signals arising due to reading errors of the servo signals may happen because of recording tape fluctuation of a level that has not been problematic in related art.

There are various factors causing fluctuations of the recording tape, such as bending of the recording tape, dispersion in the thickness distribution, residual strain, curling or an irregular winding in the width direction (height direction) at the time when the recording tape is coiled, the degrees of straightness of the take-up reel and the reel of the tape cartridge, the degrees of straightness of the motor, the tape guides, and the recording/reproducing head of the drive device, tape tension, positional displacement (recording tape may be intentionally regulated with displacement) in the width direction (vertical direction) of the plural tape guides, sliding resistance between the recording tape and contacting members, and the like.

If the traveling position of the recording tape becomes unstable for any reason, the winding position of the recording tape is caused to be in disorder when the recording tape is taken-up by the reel or the take-up reel, and, when the recording tape is next fed-out in the opposite direction, fluctuations in the position of the recording tape arise, or the recording tape collides with the regulating units (flanges) of the cylinder-shaped tape guides such that the ends (edges) in the width direction thereof become damaged.

Moreover, low-cost members are required in recording tape cartridges that are mass-produced and consumed, as compared with the number of drive devices. Therefore, it is difficult to supply a recording tape cartridge that is adjusted at the time of assembly such that the precision thereof is improved. Further, as compared with the tape guides of the drive device, the dimension of the reel hub is relatively large. Therefore, it is also difficult to obtain a reel hub having a cylindrical shape as highly accurate as the tape guides of the drive device.

In addition, when the recording tape is wound so as to be eccentrically located at one of the upper and lower flanges with respect to the center position in the width direction (height direction) of the reel hub, the wound shape (wound surface) is settled (hereinafter, 'settled winding'). However, if the recording tape is wound as described above, the one sheet recording tape skips from the settled wound surface of the end in the width direction thereof into the width direction thereof (hereinafter, one sheet skipping)

If the one sheet skipping as described above occurs, the end in the width direction of the skipping one sheet recording tape is bent against the upper flange or the lower flange, when impact is applied to the recording tape cartridge during transporting or dropping, and reading errors of servo signals occur at the time of traveling of the recording tape within the drive device. Accordingly, it is difficult to record or reproduce the information.

In contrast, if the recording tape is wound on the center in the width direction on the reel hub, the wound surface is unsettled and has a continuous gentle convex-concave shape (hereinafter, 'rough winding'). While the appearance of the rough winding is bad and the rough winding is unstable in the width direction during traveling of the recording tape (vertical movement), the amount of the skip exhibited per every one sheet (the difference of the amount of the skip between the recording tapes adjacent to each other) is smaller than that of the one sheet skipping.

That is, the rough winding prevents the ends in the width direction of the recording tape from being damaged when receiving impact during transporting or dropping, and even when damaged, the damage is slight. Further, it has become clear that vertical movement of the recording tape during traveling can be kept to within an allowable range depending on the degree of the rough winding. Accordingly, it is preferable that the recording tape is wound so that the center position in width direction thereof is aligned to the center position in the width direction (height direction) of the reel hub.

An object of the present invention is to obtain a recording tape cartridge that improves impact resistance and reduces reading errors of servo signals and recording and reproducing errors of data signals during traveling within the drive device by winding the recording tape on the center of the hub.

JP 60 202588 discloses a recording tape cartridge having a case incorporating a pair of reels (supply reel and take-up reel). In a corner of the case, a tape guide member is rotatably supported by a pin member which is formed on an inner surface of an upper portion of the case. A biasing string is provided between the front end of said pin member and a bottom of the drum-shaped tape guide.

A recording tape cartridge is known from US 2003/001037 A1, in which a tape guide is in the form of a guide roller supportedon a biased supporting arm which can swing such that the guide roller is moved in a direction which is substantially radial with respect to the reel.

### SUMMARY

According to the present invention, there is provided a recording tape cartridge having the features of claim 1.

In accordance with the preamble of claim 1, JP 9-161441 discloses a recording tape cartridge having a case incorporating a pair of supply and take-up reels. At each corner of the front site of the case, a tape guide with flanges is rotatably supported on hollow pivots which are formed on an inner surface of the lower and upper portions of the case. A compression spring is provided between the upper pivot and the tape guide. A reference pin of a drive device is adapted to penetrated the lower portion of the case through the lower pivot and to be brought into contact with the lower part of the tape guide.

A recording tape cartridge having a case incorporating a pair of supply and take-up reels is known from JP 55-135356. It comprises (see figure 6) a tape guide with flanges that is rotatably supported by a pivot projecting from an inner side of the upper portion of the case. A spring is provided between the upper portion of the case and the tape guide.

### BRIEF DESCRIPTION OF THE DRAWINGS

An exemplary embodiment of the present invention will be described in detail based on the following figures, wherein:
FIG. 1 is a schematic perspective view of a recording tape cartridge of the present invention;
FIG. 2 is a schematic exploded perspective view in a case in which the recording tape cartridge of the present invention is viewed from above;
FIG. 3A is a schematic perspective view showing a door and an opening portion of a case of the recording tape cartridge of the present invention;
FIG. 3B is a schematic perspective view showing a door and an opening portion of a case of the recording tape cartridge of the present invention;
FIG. 4 is a schematic plan view showing the recording tape cartridge of the present invention in which an upper case and the door are omitted;
FIG. 5A is a schematic side sectional view showing the structure of a tape guide and pivots of the recording tape cartridge of the present invention;
FIG. 5B is a schematic side sectional view showing another structure of the tape guide and the pivots of the recording tape cartridge of the present invention;
FIG. 6 is a schematic perspective view showing the structure of a position adjusting unit of the recording tape cartridge of the present invention;
FIG. 7A is a schematic side sectional view explaining an operation of the position adjusting unit of the recording tape cartridge of the present invention;
FIG. 7B is a schematic side sectional view explaining an operation of the position adjusting unit of the recording tape cartridge of the present invention;
FIG. 8A is a schematic perspective view showing the tape guide, in which grooves are formed, of the recording tape cartridge of the present invention;
FIG. 8B is a schematic perspective view showing the tape guide, in which another grooves are formed, of the recording tape cartridge of the present invention;
FIG. 9 is a schematic side view showing the vicinity of the tape guide of the recording tape cartridge of the present invention;
FIG. 10 is a schematic plan view showing the state of a drive device into which the recording tape cartridge of the present invention is loaded;
FIG. 11A is a schematic side view showing the state of the drive device before the recording tape cartridge of the present invention is loaded;
FIG. 11B is a schematic side view showing the state of the drive device after the recording tape cartridge of the present invention is loaded;
FIG. 12A is a schematic side sectional view showing the structure of the pivots and a tape guide, which is formed in a crowning shape, of the recording tape cartridge of the present invention;
FIG. 12B is a schematic side sectional view showing another structure of the pivots and the tape guide, which is formed in a crowning shape, of the recording tape cartridge of the present invention; and
FIG. 13 is a schematic side view showing the vicinity of the tape guide, which is formed in a crowning shape, of the recording tape cartridge of the present invention.

### DETAILED DESCRIPTION

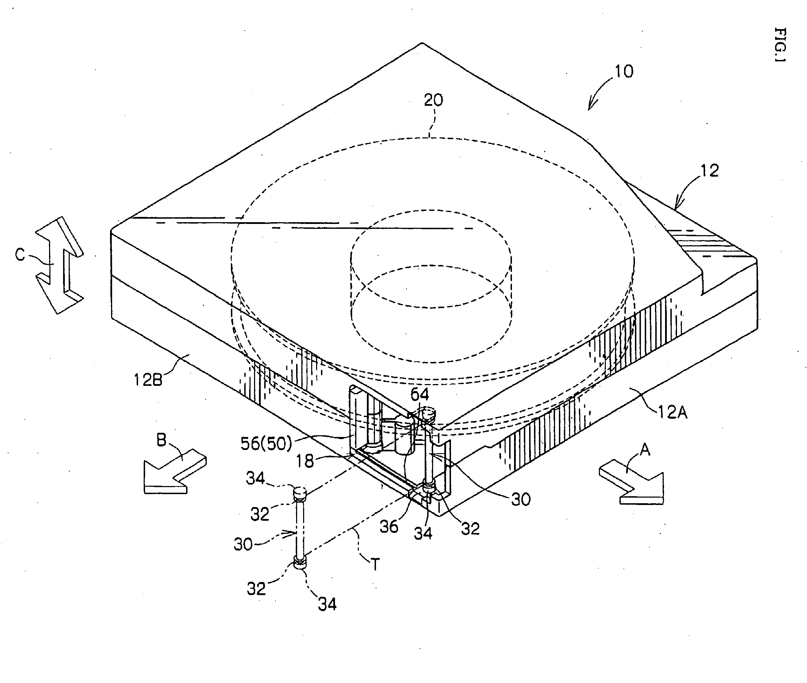

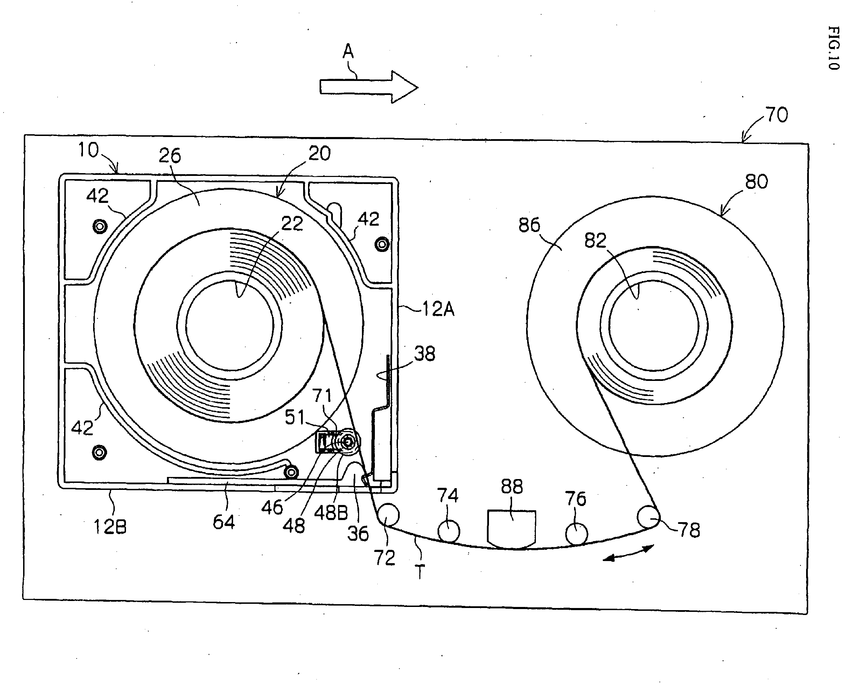

Hereinafter, preferred embodiments of the present invention will be described in detail on the basis of examples illustrated in accompanying drawings. For convenience of explanation, in FIG. 1, a direction of loading a recording tape cartridge 10 into a drive device 70 (see FIG. 10) is indicated by arrow A, and this is referred to as a front direction (the front side) of the recording tape cartridge 10. A direction of arrow B, which is orthogonal to arrow A, is referred to as the right direction (the right side). Further, the direction of arrow C is referred to as a width direction in the present invention, and there are cases in which the direction of arrow C will also be called the height direction or the vertical direction.

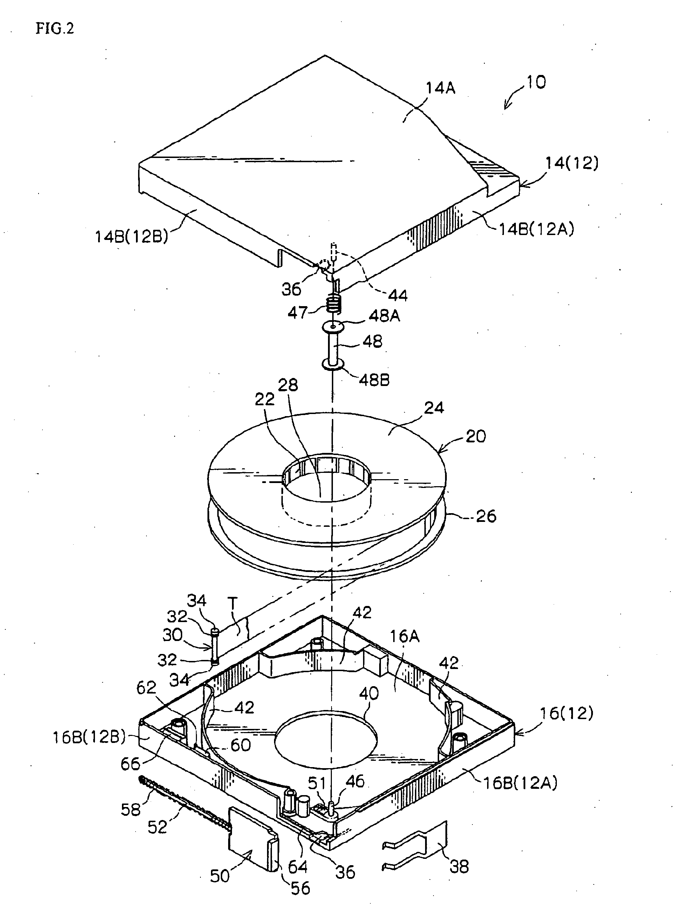

As shown in FIGS. 1 and 2, the recording tape cartridge 10 includes a substantially rectangular box-shaped case 12. The case 12 includes an upper case 14 and a lower case 16 that are formed of resin such as polycarbonate (PC). The case 12 is configured by a peripheral wall 14B, which stands erect at the peripheral edge of a ceiling plate 14A of the upper case 14, and a peripheral wall 16B, which stands erect at the peripheral edge of a floor plate 16A of the lower case 16, being joined together by ultrasonic welding or screws or the like, in a state of abutting one another.

A single reel 20 is rotatably accommodated within the case 12. The reel 20 is configured such that a reel hub 22, which is formed in a cylindrical shape having a floor and which configures the axially central portion of the reel 20, and a lower flange 26, which is provided at the lower end of the reel hub 22, are molded integrally. In addition, an upper flange 24 is ultrasonically welded to the upper end of the reel hub 22. A recording tape T, such as a magnetic tape which serves as an information recording/reproducing medium, is wound on the outer peripheral surface of the reel hub 22. The width direction ends (edges) of the wound recording tape T are held by the upper flange 24 and the lower flange 26.

A reel gear (not shown) is formed in a toroidal shape on the bottom surface of a floor wall 28 of the reel hub 22. A gear opening 40 for exposing the reel gear to the outside is formed in the central portion of the lower case 16. The reel gear, which is exposed through the gear opening 40, meshes with a driving gear (not shown) of the drive device 70 (see FIG. 10), and is rotated and driven. For the reason, the reel 20 can rotate relative to the case 12 within the case 12.

A toroidal reel plate (not shown) formed of magnetic material is fixed by insert molding or the like to the inner side in the radial direction of the reel gear on the bottom surface of the floor wall 28. The reel plate is adhered and held to the inner side in the radial direction of the reel gear by the magnetic force of a toroidal magnet (not shown) of the drive device 70. Further, the reel 20 is held so as not to cause backlash by float regulating walls 42 that project out partially to the inner surfaces of the upper case 14 and the lower case 16. The float regulating walls 42 are inner walls that are on a circular locus coaxial with the gear opening 40.

An opening 18 for the pulling-out of the recording tape T wound on the reel 20 is formed in a right wall 12B of the case 12. A leader pin 30, which is pulled-out and operated while being anchored (engaged) by a pull-out member (not shown) of the drive device 70, is fixed to the free end of the recording tape T which is pulled-out from the opening 18.

Toroidal grooves 32 are formed in the both ends of the leader pin 30 that project-out from the width direction ends of the recording tape T. These toroidal grooves 32 are anchored by hooks of the pull-out member or the like. In this way, at the time when the recording tape T is pulled-out, the hooks or the like do not contact and scratch the recording tape T.

Further, a pair of pin holding portions 36 is provided at the inner side of the opening 18 of the case 12, that is, at the inner surface of the ceiling plate 14A of the upper case 14 and the inner surface of the floor plate 16A of the lower case 16, and are used to position and hold the leader pin 30 within the case 12. The pin holding portions 36 are formed in semicircular shapes whose recording tape T pull-out sides are open. Both ends 34 of the leader pin 30, which is in an upright state, can enter into and exit from the pin holding portions 36 from these open sides.

A plate spring 38 is disposed and fixed in the vicinity of the pin holding portions 36. The forked distal ends of the plate spring 38 respectively engage with the upper and lower ends 34 of the leader pin 30, such that the leader pin 30 is held in the pin holding portions 36. Note that, when the leader pin 30 is to enter into or exit from the pin holding portions 36, the distal ends of the plate spring 38 are appropriately elastically deformed so as to permit the movement of the leader pin 30.

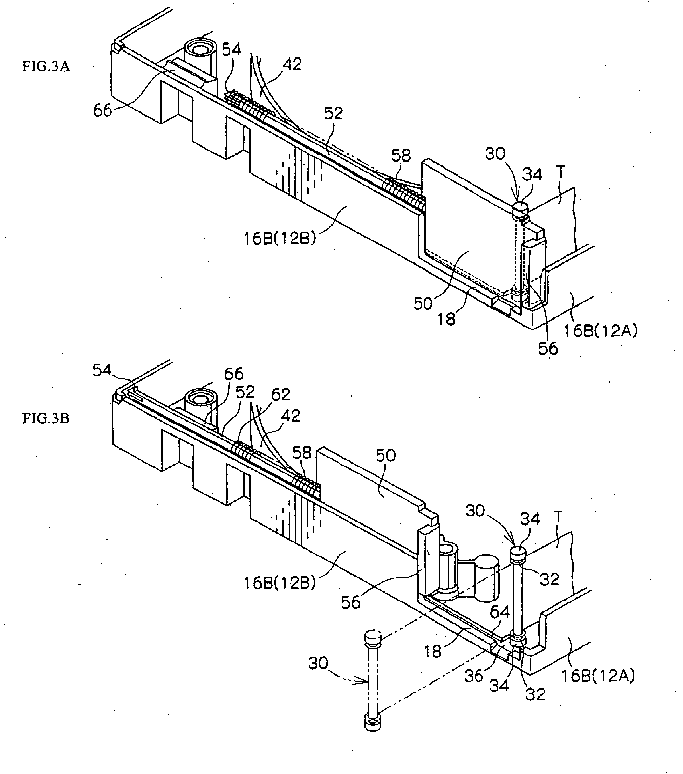

The opening 18 is opened and closed by a door 50. As shown in detail in FIGS. 3A and 3B, the door 50 is structured as a substantially rectangular plate with a size that can close the opening 18. Groove portions 64, into which the upper and lower ends of the door 50 are slidably fit, are formed in the ceiling plate 14A and the floor plate 16A at the inner side of the opening 18, such that the door 50 can move along the right wall 12B of the case 12.

A shaft 52 is formed to project at the center of the rear end of the door 50. A coil spring 58 is fit around the shaft 52. A widened portion 54, which prevents the coil spring 58 from falling-off, is formed at the rear end of the shaft 52. As shown in FIG. 2, a supporting stand 60, which has an anchor portion 62 engaging with the rear end of the coil spring 58 fit around the shaft 52, is disposed to project from the lower case 16.

Therefore, the shaft 52 is supported so as to freely slide on the supporting stand 60, and the rear end of the coil spring 58 is anchored on the anchor portion 62. The door 50 is thereby always urged in the direction of closing the opening 18 by the urging force of the coil spring 58. It is preferable that a supporting stand 66, which supports the shaft 52 when the opening 18 is open, be formed so as to project-out at the rear side of the supporting stand 60.

A convex portion 56 for opening/closing operation projects outwardly from the front end of the door 50. The convex portion 56 engages with an opening/closing member (not shown) of the drive device 70 as the recording tape cartridge 10 is loaded into the drive device 70. The door 50 is thereby opened against the urging force of the coil spring 58.

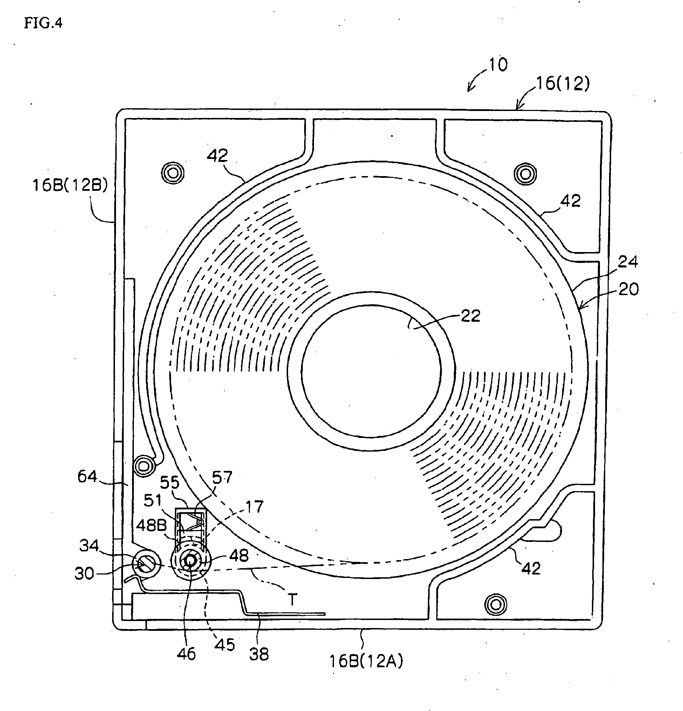

Further, as shown in FIGS. 4 to 7, pivots 44 and 46 project at predetermined positions of the upper case 14 and the lower case 16, respectively, in the vicinity of the opening 18. When the case 12 is assembled, the pivots 44 and 46 are fit with play in a substantially cylinder-shaped tape guide 48. The inner diameter of the tape guide 48 is formed to be slightly larger than the outer diameters of the pivots 44 and 46. The tape guide 48 may be freely rotated in the state in which it is supported by the pivots 44 and 46.

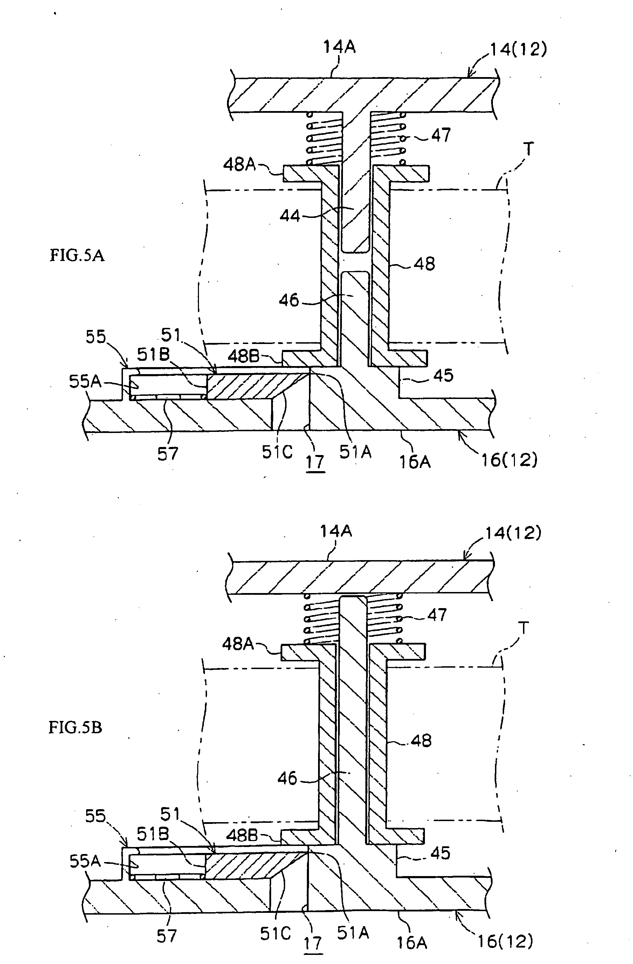

It is also possible to employ a structure in which the pivot 46, which substantially has the same height as the height of the interior of the case 12 (substantially the same height as the tape guide 48) is provided so as to project at either one of the upper case 14 and the lower case 16, for example, at only the lower case 16 as shown in FIG. 5B, and the tape guide 48 is fit with play on this pivot 46. In this way, the recording tape cartridge 10 becomes easy to be assembled.

Flanges 48A and 48B are formed integrally at the upper and lower ends of the tape guide 48, so that the positions of the edges, which are the width direction ends (upper and lower ends) of the recording tape T, can be regulated. The outer diameter of the tape guide 48, where the recording tape T slidably contacts, (i.e., the portion except the flanges 48A and 48B) is preferably about 6 mm to 10 mm.

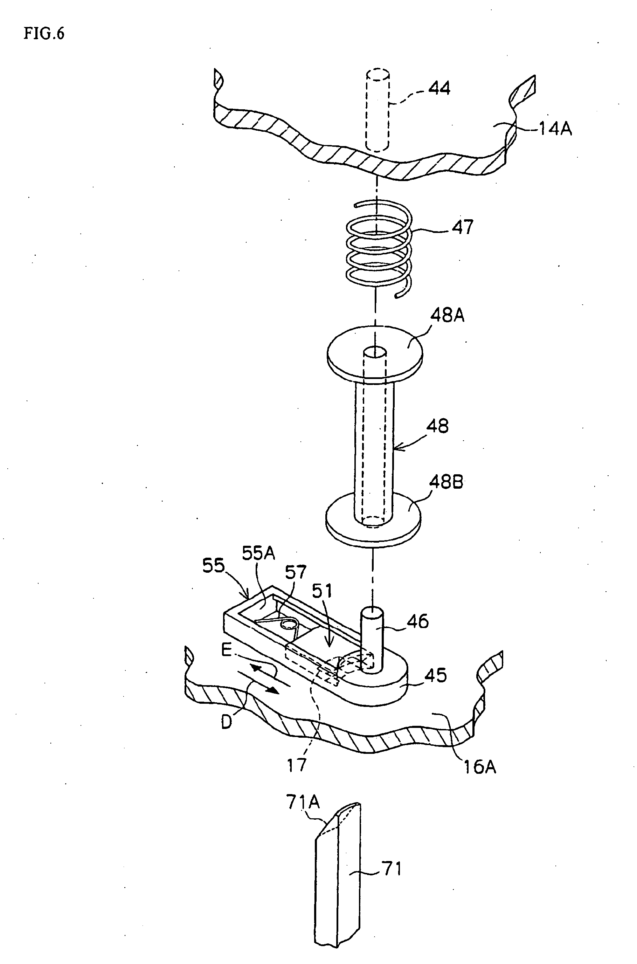

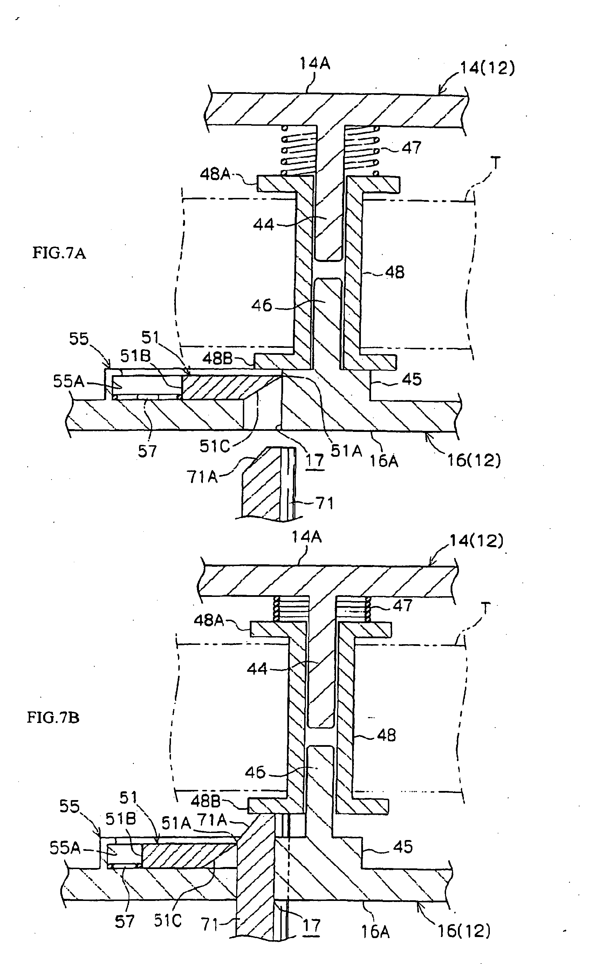

As shown in FIG. 6, FIG. 7A and FIG. 7B, the tape guide 48 is structured such that, when the recording tape cartridge 10 is loaded into the drive device 70, accompanying with (working with) the upward movement of the reel 20, the tape guide 48 can move upwardly so as to become the same height as the reel 20. That is, a coil spring 47 is fit on the pivot 44. One end of the coil spring 47 is supported to the ceiling plate 14A, whereas the other end is supported to the top surface of the flange 48A of the tape guide 48. In this way, the tape guide 48 is always urged toward the floor plate 16A.

The pivot 46 projects at the center of the top surface of a cylindrical base 45 which projects at the floor plate 16A. The bottom surface of the flange 48B abuts the base 45 due to the urging force of the coil spring 47. The outer diameter of the flange 48B is formed so that the flange 48B protrudes out from the base 45 by a predetermined length (a length for an engaging pin 71 to abut) as seen in plan view.

A substantially rectangular hole 17 is perforated through the floor plate 16A in the vicinity of the base 45 (adjacent to the base 45). The opposite sides of the hole 17 in cross direction are parallel circle arcs, and the opposite sides in longitudinal direction are parallel straight lines. The hole 17 overlaps with the flange 48B as seen in plan view (see FIG. 4). When the recording tape cartridge 10 is loaded into the drive device 70, due to the engaging pin 71, which is provided at the drive device 70 and passes through the hole 17, the tape guide 48 moves via the flange 48B toward the ceiling plate 14A counter to the urging force of the coil spring 47.

The hole 17 can be closed by a cover 51. The cover 51 is provided within a substantially rectangular frame-shaped frame 55, which is integral with the base 45 and is provided at the floor plate 16A so as to project to the same height as the base 45. The cover 51 is held so as to slide in the cross direction (the direction of arrow D and the direction of arrow E), and is always urged in the direction of closing the hole 17 by an urging member such as a torsion spring 57.

That is, one end of the torsion spring 57 abuts a rear end 51 B of the cover 51 that is positioned at the opposite side of the hole 17. The other end of the torsion spring 57 abuts a rear wall 55A within the frame 55 that is positioned at the opposite side of the hole 17. A leading end 51 A, on the side of the hole 17, of the cover 51 is cut-out to have a substantially circle arc shape as seen in plan view, so as to match the configuration of the base 45.

Due to the urging force of the torsion spring 57, the cover 51 slides in the direction of arrow D toward the hole 17, and abuts the peripheral surface (side surface) of the base 45, and closes the hole 17. In this way, when the recording tape cartridge 10 is in a state of non-use in which it is not loaded into the drive device 70 (e.g., at the time when the recording tape cartridge 10 is being stored, or is being transported, or the like), the entrance of dust and the like from the hole 17 is prevented.

The bottom surface of the leading end 51 A of the cover 51 is an inclined surface 51C with a predetermined angle (e.g., 45 deg.). Accordingly, the distal end of the engaging pin 71 is formed to be an inclined surface 71A with a predetermined angle (for example, 45 deg.) that can slide along the inclined surface 51C. Namely, when the engaging pin 71 enters-in from the hole 17 and the inclined surface 71 A abuts the inclined surface 51C and pushes it upward, the cover 51 slides in the direction of arrow E and opens the hole 17.

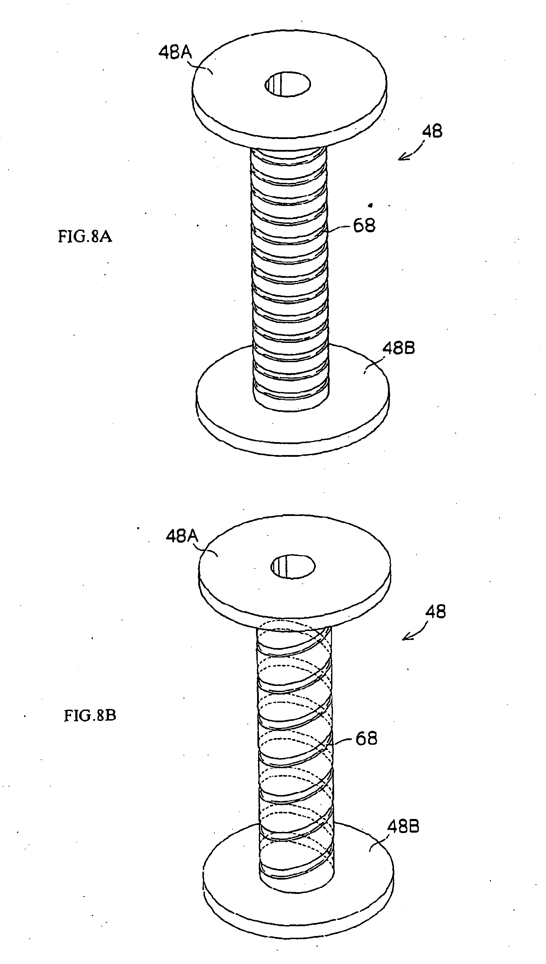

Further, as shown in FIG. 8A, it is preferable that groove portions 68, which are substantially parallel to the traveling direction of the recording tape T, are formed in the tape guide 48. When such groove portions 68 are formed, the carrier air, which arises between the recording tape T and the tape guide 48 while the tape T is traveling, can be removed with its passing through the interiors of the groove portions 68.

In this way, the recording tape T can travel while being attracted to the peripheral surface of the tape guide 48. The configuration of the groove portion 68 may have a helical shape as shown in FIG. 8B, and is not limited to the illustrated structures. Further, the material of the tape guide 48 may be resin or metal.

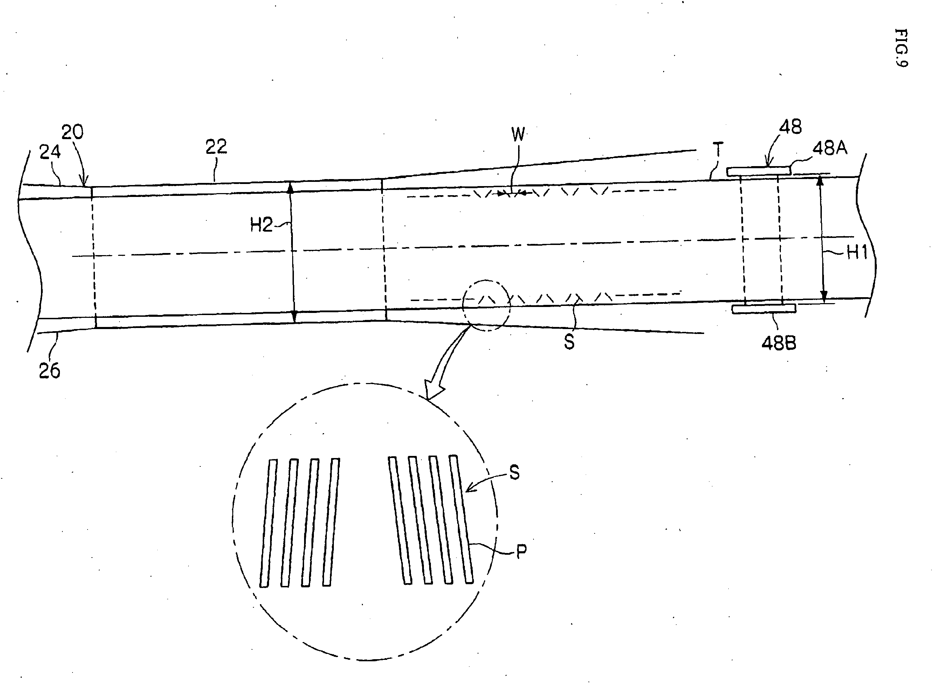

As shown in FIG. 9, a width (height) H1 of the portion of the tape guide 48 where the recording tape T slidably contacts (the portion of the tape guide 48 except the flanges 48A and 48B) is formed to be smaller than a width (height) H2 of the reel hub 22. Further, the tape guide 48 is assembled such that the central position in the width direction (height direction) of the tape guide 48 substantially agrees with (so as to have a same height) the central position in the width direction (height direction) of the reel hub 22.

As shown in FIG 10, the tape guide 48 is provided between the reel 20 (the upper flange 24 and the lower flange 26) and the leader pin 30, and the tape guide 48 is disposed with high accuracy at a position at which the recording tape T can slidably come into contact with the tape guide 48, at least during the period of time when the leader pin 30 (the recording tape T) is being pulled-out from the case 12 (It is preferable that the tape guide 48 is disposed at a position at which the recording tape T can slidably come into contact with the leader guide 48, also at times when the leader pin 30 is held at the pin holding portions 36 as shown in FIG. 4).

Due to the tape guide 48, the recording tape T is regulated such that the center position in the width direction (vertical direction) of the recording tape T is at substantially the same height as the central position in the width direction (height direction) of the reel hub 22 (see FIGS. 5A and 5B, FIGS. 7A and 7B).

Next, the action of the recording tape cartridge 10 having the above-described structure will be described. When the recording tape cartridge 10 is not in use (is being stored or is being transported or the like), the opening 18 is closed by the door 50. When the recording tape T is to be used, the recording tape cartridge 10 is loaded into the drive device 70 along the direction of arrow A with its front wall 12A leading.

The recording tape cartridge 10 is inserted into a bucket (not shown), and an opening/closing member (not shown) provided at the bucket (drive device 70 side) engages with the convex portion 56 of the door 50. In this state, when the recording tape cartridge 10 moves further in the direction of arrow A, the opening/closing member causes the convex portion 56 to move relatively rearward counter to the urging force of the coil spring 58. In this way, the door 50 having the convex portion 56 slides rearward within the groove portions 64 along the side wall 12B, and opens the opening 18.

When the recording tape cartridge 10 moves to a predetermined loading depth of the drive device 70 (the bucket), and the opening 18 is completely opened, the bucket, which is accommodating the recording tape cartridge 10, is lowered a predetermined height, and positioning members (not shown) of the drive device 70 are inserted relatively into hole portions for positioning (not shown) which are formed in the lower case 16. In this way, the recording tape cartridge 10 is positioned accurately at a predetermined position within the drive device 70, and further sliding of the door 50 (further movement of the door 50 rearward) is regulated.

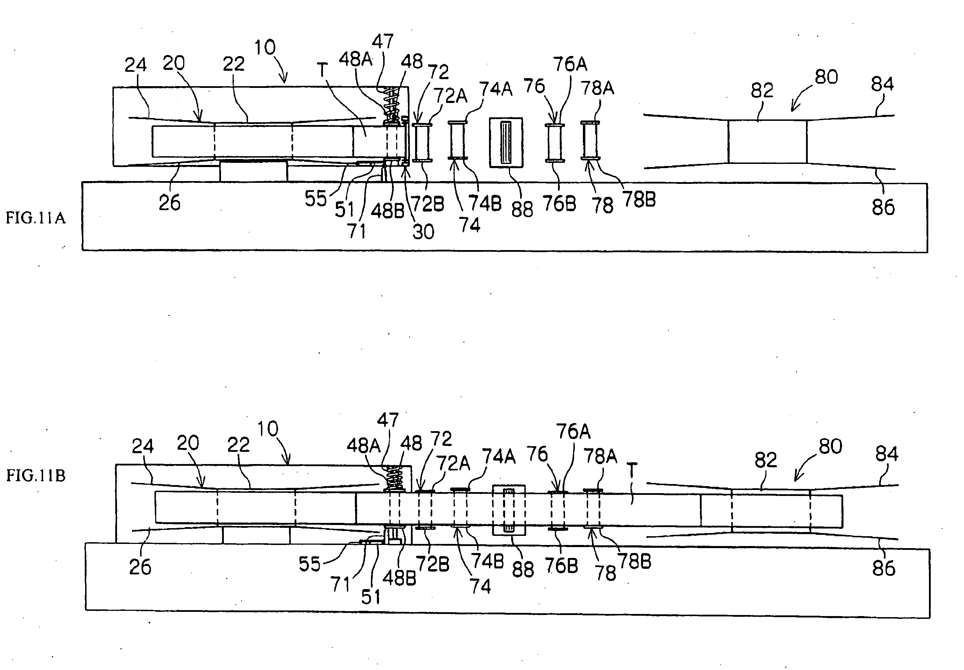

Due to the operation of the recording tape cartridge 10 (bucket) being lowered, the driving gear (not shown) relatively enters-in from the gear opening 40, meshes with the reel gear (not shown) of the recording tape cartridge 10, and raises the reel 20 to a predetermined height (see FIGS. 11A and 11B). Then, in the state in which the driving gear and the reel gear are completely meshed with each other, the reel plate (not shown) is attracted and held by the magnetic force of the toroidal magnet (not shown) provided at the inner side of the driving gear. In this way, the reel 20 is set in an unlocked state in which it can rotate relative to the case 12 within the case 12, while the meshing of the reel gear with the driving gear is maintained.

Further, due to the operation of the recording tape cartridge 10 (bucket) being lowered, the engaging pin 71, which projects at the drive device 70, relatively enters-in from the hole 17, and the inclined surface 71 A at the distal end thereof pushes the inclined surface (bottom surface) 51C of the leading end 51A of the cover 51 upwardly. Thus, the cover 51 slides in the direction of arrow E counter to the urging force of the torsion spring 57, and the hole 17 is opened as the engaging pin 71 enters (see FIGS. 7A and 7B).

Since the hole 17 overlaps with the flange 48B as seen in plan view, the engaging pin 71, which passes through the hole 17, abuts the bottom surface of the flange 48B, and pushes the tape guide 48 upward via the flange 48B counter to the urging force of the coil spring 47. Accordingly, the reel 20 and the tape guide 48 are always held at the same height position (see FIGS. 11A and 11B).

In this way, misregistration between the height positions of the reel 20 and the tape guide 48 does not arise, and kink of the recording tape T does not arise. Namely, the recording tape T is not damaged. Further, a position adjusting unit, which includes an urging member (the coil spring 47) that urges the tape guide 48 toward the floor plate 16A and the like, is provided at the recording tape cartridge 10. Therefore, the height position of the tape guide 48 can be adjusted by providing the engaging pin 71 projecting at the drive device 70, without disposing a complex mechanism such as an actuator for raising the tape guide 48, and the manufacturing cost can be made to be low.

The pull-out member (not shown) that is provided at the drive device 70 enters into the case 12 from the opening 18 that has been opened, and grasps and pulls-out the leader pin 30 which is positioned and held at the pin holding portions 36. Since the recording tape cartridge 10 is accurately positioned within the drive device 70 at this time, the hooks of the pull-out member can reliably be made to anchor the toroidal grooves 32 of the leader pin 30. Further, the rotation locked state of the reel 20 is released. Accordingly, as the leader pin 30 is pulled-out, the reel 20 rotates.

The leader pin 30 that is pulled-out from the opening 18 is accommodated at a reel hub 82 of a take-up reel 80 of the drive device 70. At this time, after the width direction (vertical direction) position of the recording tape T is regulated by the tape guide 48 as shown in FIG. 11B, the recording tape T is supported by the plurality of tape guides 72, 74, 76, and 78 which form a predetermined tape path.

That is, as shown in FIG. 4, in the state in which the leader pin 30 is held in the pin holding portions 36, the tape guide 48 is disposed at a position at which the recording tape T slidably comes into contact with the tape guide 48. Further, as shown in detail in FIG. 9, in side view, the tape guide 48 is assembled such that the central position in the width direction (height direction) of the tape guide 48 is at substantially the same height as the central position in the width direction (height direction) of the reel hub 22, and the width H1 of the tape guide 48 is smaller than the width H2 of the reel hub 22.

Accordingly, width direction (vertical direction) fluctuations of the recording tape T during traveling can be relieved, and sudden vertical fluctuations of the recording tape T can be suppressed by the tape guide 48. In this way, the traveling position of the recording tape T can be stabilized, and even with a recording tape T having an improved recording density, the occurrence of reading errors of servo signals S (see FIG. 9) and recording/reproducing errors of the data signals at the drive device 70 can be reduced.

Note that, if the groove portions 68 such as shown in FIGS. 8A and 8B are formed in the tape guide 48, the recording tape T can travel while being attracted to the peripheral surface of the tape guide 48. In this way, sudden vertical fluctuations of the recording tape T can be suitably suppressed, and the traveling position of the recording tape T can be stabilized more.

The recording tape T, which is pulled-out from the case 12 while slidably coming into contact with the tape guide 48 and the position in the width direction thereof (vertical direction) is regulated, first slidably comes into contact with the drive device tape guide 72 which is disposed nearest to the recording tape cartridge 10. The tape guide 72 is assembled such that the height position of the tape guide 72 is disposed to deflect to either of the upper and the lower positions rather than the height position of the tape guide 48, for example, to the lower position.

Accordingly, the recording tape T, which comes into contact with the drive device tape guide 72, travels in a state in which the edge of the upper end thereof is regulated by an upper flange 72A of the tape guide 72, and slidably comes into contact with the drive device tape guide 74. The tape guide 74 is assembled such that the width direction (height direction) central position thereof is disposed to deflect upward more than the width direction (height direction) central position of the reel hub 22. Therefore, the edge at the lower end of the recording tape T is regulated by a lower flange 74B of the tape guide 74.

Then, the recording tape T, whose position is regulated by the tape guide 74, slidably comes into contact with the tape guide 76 next. Before slidably coming into contact with the tape guide 76, the recording tape T slidably comes into contact with a recording/reproducing head 88. The tape guide 76 is assembled such that the width direction (height direction) central position thereof, opposite to the tape guide 74, that is like the tape guide 72, is disposed to deflect downward more than the width direction (height direction) central position of the reel hub 22. The edge of the upper end of the recording tape T is regulated by an upper flange 76A of the tape guide 76.

Then, the recording tape T, whose position is regulated by the tape guide 76, finally slidably comes into contact with the tape guide 78. In the same way as the tape guide 74, the tape guide 78 is assembled such that the width direction (height direction) central position thereof is disposed to deflect upward more than the width direction (height direction) central position of the reel hub 22. The edge of the lower end of the recording tape T is regulated by a lower flange 78B of the tape guide 78.

By making the height positions (width direction positions) of the respective tape guides 72 to 78 within the drive device 70 differ alternately along the tape path of the recording tape T in this way, the regulating of the width direction (vertical direction) position of the recording tape T can be carried out suitably. If the groove portions 68 which are similar to that of the tape guide 48 are formed in the tape guides 72 to 78 as well, of course, sudden vertical fluctuations in the recording tape T can be suppressed, and the traveling of the recording tape T can be stabilized more.

When the recording tape T is supported by the tape guides 48 and 72~78, and the leader pin 30 is accommodated at the reel hub 82 of the take-up reel 80, the recording tape T is to be successively pulled-out from the case 12, and to be taken-up by the take-up reel 80 due to synchronous rotation and driving of the take-up reel 80 and the reel 20. At this time, the recording or reproducing of information is carried out by the recording/reproducing head 88 that is disposed between the tape guides 74 and 76.

The recording/reproducing head 88 is supported so as to be able to move in the vertical direction (the height direction) by an actuator (not shown), and moves in the vertical direction (height direction) following the servo signals S provided on the recording tape T. As shown in FIG. 9, for example, four patterns P (or five or the like may be used) arranged parallel to each other are provided to form a substantially truncated V-shape as one servo signal group S. A plurality of these groups are disposed in lines in the vicinities of the upper and lower ends of the recording tape T, such that the widening sides of the servo signal groups S formed in substantially truncated V-shapes face outward.

According to the servo signal S, it can be understood that, when the sensing time (distance) of one servo signal group S (shown by W in FIG. 9) becomes long, the position of the recording tape T that is traveling is drifting upward or downward with respect to the recording/reproducing head 88. Therefore, the vertical direction (height direction) position of the recording/reproducing head 88 can be adjusted in accordance therewith.

In particular, in recent recording tape T with higher recording density (higher capacity), the size of the servo signals S (the length of the patterns P) and the size of the recorded signals themselves are made to be small, and the distance between the patterns P and the distance between the recorded signals are also made to be small. Therefore, it is effective to stabilize the traveling of the recording tape T (suppress the sudden vertical fluctuations of the recording tape T) by using the tape guide 48.

Note that, in FIG. 10, the upper flanges 24 and 84 (see FIGS. 11A and 11B) are omitted in the reel 20 and the take-up reel 80. That is, the reel 20 and the take-up reel 80 are shown by the reel hubs 22 and 82, the lower flanges 26 and 86, and the recording tape T. Further, since the tape path of the recording tape T passes between the forked distal ends of the plate spring 38, the tape path does not interfere with the plate spring 38.

The recording tape T slidably comes into contact with the recording/reproducing head 88 while the height position (width direction position) thereof is regulated by the tape guides 48 and 72 to 78. Therefore, the recording tape T in which the recording or reproducing of information can be completed without errors is re-wound onto the reel 20 by the reverse rotations of the driving gear and the take-up reel 80. At this time, since the position in vertical direction of the recording tape T is regulated by the tape guide 48, the recording tape T is substantially wound at the center in the width direction (height direction) of the reel hub 22.

That is, due to the dispersions of the various portions of the drive device 70 or the desorption to the drive device 70 of the recording tape cartridge 10, the relative positions of the reel 20 and the tape guides 72 to 78 may change. However, the reel 20 and the tape guide 48 are both provided within the same case 12, and can move to the same height position in synchronization with each other (work with each other). Therefore, the reel 20 and the tape guide 48 are always in the same positions in the horizontal direction and the vertical direction. Accordingly, the traveling position of the recording tape T can be stabilized, and the recording tape T can be continuously wound on the center in the width direction of the reel hub 22.

When the recording tape T is re-wound on the reel 20 to the end and the leader pin 30 is held at the pin holding portions 36, the bucket accommodating the recording tape cartridge 10 rises a predetermined height, the positioning members (not shown) are pulled-out from the hole portions for positioning (not shown), the driving gear is pulled-out from the gear opening 40, and the meshing of the driving gear with the reel gear is released. Then, the reel 20 is lowered to its original height position.

When the engaging pin 71 is pulled-out from the hole 17 accompanying with the raising of the bucket which accommodates the recording tape cartridge 10, the tape guide 48 is, due to the urging force of the coil spring 47, lowered by working with (synchronously with) the falling movement of the reel 20. Due to the bottom surface of the flange 48B abutting the base 45, the tape guide 48 is held at its original height position.

When the engaging pin 71 is pulled-out from the hole 17, the hole 17 is closed by the cover 51 which is urged by the torsion spring 57, that is, the cover 51 slides in the direction of arrow D due to the urging force of the torsion spring 57, and the leading end 51A of the cover 51 abuts the peripheral surface of the base 45. The hole 17 is thereby closed.

In this way, the hole 17 is closed by the cover 51 all the time, except when the engaging pin 71 is inserted in the hole 17 (i.e., when the recording tape cartridge 10 is loaded in the drive device 70). Therefore, when the recording tape cartridge 10 is not in use (is being stored or is being transported or the like), there is no fear that dust or the like will enter into the recording tape cartridge 10 (the case 12) from the hole 17.

Thereafter, the recording tape cartridge 10 is moved in the direction opposite to the direction of arrow A by an ejecting mechanism (not shown). Accompanying with this movement, the door 50 slides in the direction of closing the opening 18 due to the urging force of the coil spring 58, and completely closes the opening 18 (returns to the initial state). The recording tape cartridge 10, whose opening 18 is closed in this way, is completely ejected from the drive device 70 (the bucket).

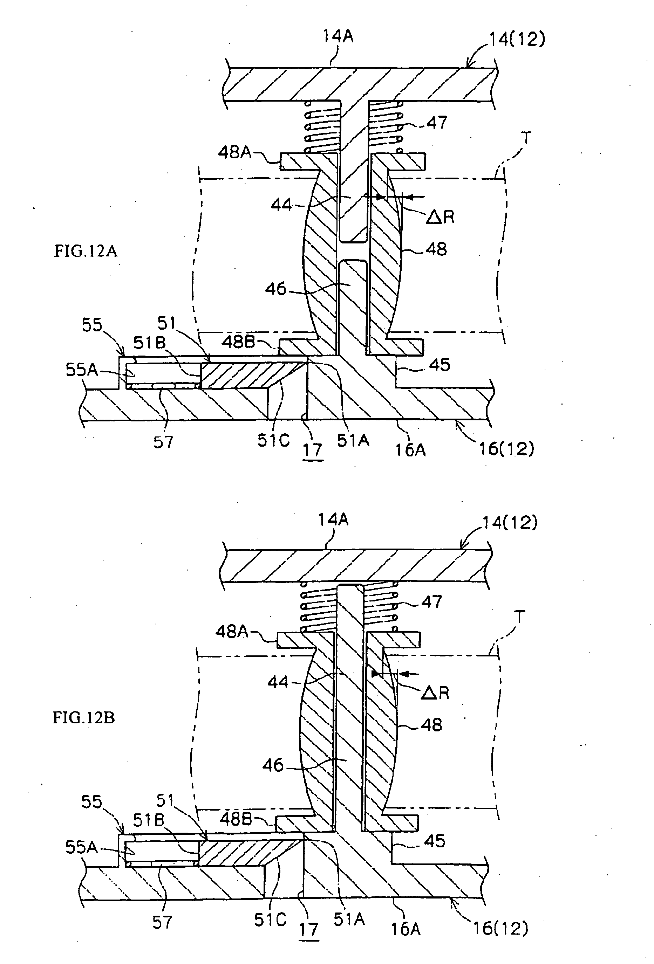

A modified example of the tape guide 48 will be described next. However, as the action thereof is similar to that described above, description of the action of the modified example will be omitted. As shown in FIGS. 12A and 12B, the tape guide 48 is substantially formed in a drum shape (crowning shape) such that the central portion thereof as seen in side view swells-out to form circular arc. In the case of this configuration, metal is easier to mold. Further, it is preferable that a difference ΔR of the maximum radius and the minimum radius of the tape guide 48 is ΔR = 70 µm to 500 µm, and more preferably, ΔR = 100 µm to 200 µm.

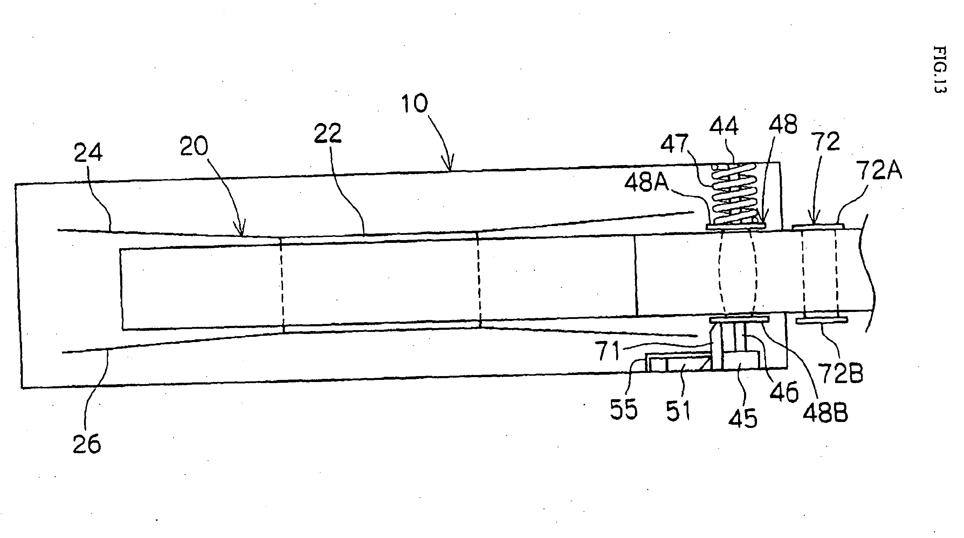

When the tape guide 48 is substantially formed in the drum shape (crowning shape), as shown in FIG. 13, the position of the recording tape T which is traveling can always be appropriately regulated to the width direction (height direction) center of the tape guide 48. Therefore, sudden vertical fluctuations of the recording tape T can be suppressed, and the recording tape T can be preferably wound on the reel hub 22 in the center thereof in the width direction. Of course, each of the drive device tape guides 72 to 78 may be substantially formed in the drum shape (crowning shape). Further, the groove portions 68 may be formed in the tape guides 48 and 72 to 78 that are substantially formed in the drum shape (crowning shape).

As described above, since the tape guide 48 with which the recording tape T slidably comes into contact at least while the leader pin 30 is being pulled-out from the opening 18, is provided within the case, vertical fluctuations of the recording tape T can be mitigated, and sudden vertical fluctuations of the recording tape T can be suppressed. In addition, since the height of the center in the width direction (height direction) of the tape guide 48 substantially agrees with that of the reel hub 22, the recording tape T is wound on the center in the width direction of the reel hub 22. Therefore, one sheet skipping of the recoding tape T may be prevented, and impact resistance may be improved. Accordingly, during the traveling within the drive device 70, the occurrences of reading errors of servo signals and recording/reproducing errors of data signals can be reduced.

Further, if the groove portions 68 are formed in the tape guide 48, the recording tape T can be made to travel while being attracted to the tape guide 48. If the tape guide 48 is formed in a drum shape (crowning shape), it is possible to substantially regulate the position of the recording tape T to the center in the width direction of the tape guide 48. That is, by adding such a structure, sudden vertical fluctuations of the recording tape T can be suppressed, and the traveling position of the recording tape T can be stabilized.

Even in the case of a small-capacity recording tape cartridge 10 in which the amount of the recording tape T wound on the reel hub 22 is reduced, by providing the tape guide 48, the tape path in which the recording tape is pulled-out from the case 12 can always be made to be uniform (path that slidably comes into contact with the tape guide 48).

Therefore, there is no need to separately prepare a reel with a large hub (not shown) in which the diameter of the reel hub 22 is made to be larger for a small-capacity tape cartridge. That is, the tape path of the recording tape can always be made to be uniform regardless of the winding amount of the recording tape T wound on the reel hub 22 and the size of the diameter of the reel hub 22. Accordingly, it is possible to improve the flexibility of the recording tape cartridges 10.

## Claims

1. A recording tape cartridge, comprising:
a case (12) in which a single reel (20) having a hub (22) around which a recording tape (T) is wound is rotatably accommodated;
an opening (18) formed in the case (12), from which a leader member (30) attached to the end of the recording tape (T) is pulled out,
a tape guide (48) with which the recording tape slidably comes into contact at least when the leader member is pulled out from the opening, provided in the case (12), a center of the tape guide (48) in the width direction thereof being positioned at the same height as a center of the hub (22) in the width direction thereof as seen in side view,
a position adjusting unit adapted to move the tape guide (48) to the same height as the reel (20), in conjunction with the reel, the position adjusting unit including: an urging member (47) that urges the tape guide (48) toward a floor plate (16A) of the case (12),
and a hole (17) that is perforated through the floor plate (16A) of the case (12), said hole being adapted to receive an engaging member (71) of a drive device (70), that enters the hole and moves the tape guide (48) toward a ceiling plate (14A) of the case (12) counter to an urging force of the urging member (47),
a pivot (46) perpendicularly projecting from the floor plate (16A) of the case (12), the tape guide (48) being rotatably mounted on said pivot (46)
**characterized in that** said hole is perforated through the floor plate, not coaxially with the tape guide (48), so as to overlap with flanges (48A, 48B) formed at the width direction ends of the tape guide (48), in plan view, the tape guide (48) being adapted to be moved by the engaging member (71) toward the ceiling plate of the case (12) via said flanges (48A, 48B), **in that** said pivot (46) is formed as a solid body.

2. A recording tape cartridge of claim 1, wherein the tape guide substantially has the same height as the interior of said case (12).

3. The recording tape cartridge of claim 1 or 2, wherein the tape guide (48) is substantially formed in a cylinder shape having flanges (48A, 48B) at both width-direction ends thereof and is configured so as to be able to rotate along with the slidable contact with the recording tape.

4. The recording tape cartridge of claim 1 or 2, wherein a width of the tape guide is smaller than that of the hub.

5. The recording tape cartridge of claim 3, wherein a width of the tape guide is smaller than that of the hub.

6. The recording tape cartridge of claim 1 or 2, further including a cover (51) that closes the hole when the recording tape cartridge is not loaded in a drive device (70).

7. The recording tape cartridge of claim 1 or 2, wherein grooves (68) are formed in the tape guide (48).

8. The recording tape cartridge of claim 1 or 2, wherein the tape guide (48) is formed in a drum shape.

## Patentansprüche

1. Aufzeichnungsbandkassette, umfassend:
ein Gehäuse (12), in welchem eine Einzelspule (20) mit einer Nabe (22), um die ein Aufzeichnungsband (T) geschlungen ist, drehbar aufgenommen ist;
eine in dem Gehäuse (12) ausgebildete Öffnung (18), aus der ein an dem Ende des Aufzeichnungsbands (T) angebrachtes Führungselement (30) ausziehbar ist,
eine Bandführung (48), mit der das Aufzeichnungsband gleitend zumindest dann in Berührung tritt, wenn das Führungselement aus der Öffnung gezogen wird, und die in dem Gehäuse (12) vorgesehen ist, wobei eine Mitte der Bandführung (48) in deren Breitenrichtung auf der gleichen Höhe liegt wie die Mitte der Nabe (22) in deren Breitenrichtung bei Betrachtung von der Seite, eine Stellungsjustiereinheit, ausgebildet zum Bewegen der Bandführung (48) auf die gleiche Höhe wie die Spule (20) im Verein mit der Spule, wobei die Stellungsjustiereinheit enthält: ein Vorspannelement (47), welches die Bandführung (48) in Richtung einer Bodenplatte (16A) des Gehäuses (12) drängt, und ein Loch (17), welches die Bodenplatte (16A) des Gehäuses (12) durchsetzt, wobei das Loch zum Aufnehmen eines Eingriffsglieds (71) einer Antriebseinrichtung (70) ausgebildet ist, welches in das Loch eintritt und die Bandführung (48) in Richtung einer Deckenplatte (14A) des Gehäuses (12) gegen eine Vorspannkraft des Vorspannelements (47) bewegt, wobei von der Bodenplatte (16A) des Gehäuses (12) ein Achszapfen vorsteht, auf dem die Bandführung (48) drehbar gelagert ist,
**dadurch gekennzeichnet, dass** das Loch die Bodenplatte nicht-koaxial bezüglich der Bandführung (48) durchsetzt, um sich mit Flanschen (48A, 48B), die an den Enden der Bandführung (48) in Breitenrichtung ausgebildet sind, im Grundriss zu überlappen, die Bandführung (48) dazu ausgebildet ist, von dem Eingriffsglied (71) in Richtung der Deckenplatte des Gehäuses (12) über die Flansche (48A, 48B) bewegt zu werden, und der Achszapfen (46) als massiver Körper ausgebildet ist.

2. Aufzeichnungsbandkassette nach Anspruch 1, bei der die Bandführung im wesentlichen die gleiche Höhe aufweist wie das Innere des Gehäuses (12).

3. Aufzeichnungsbandkassette nach Anspruch 1 oder 2, bei der die Bandführung (48) im wesentlichen aus einem Zylinder mit Flanschen (48A, 48B) an dessen beiden Enden in Breitenrichtung ausgebildet und so konfiguriert ist, dass sie in Gleitkontakt mit dem Aufzeichnungsband drehbar ist.

4. Aufzeichnungsbandkassette nach Anspruch 1 oder 2, bei der eine Breite der Bandführung kleiner ist als die Breite der Nabe.

5. Aufzeichnungsbandkassette nach Anspruch 3, bei der die Breite der Bandführung kleiner ist als die Breite der Nabe.

6. Aufzeichnungsbandkassette nach Anspruch 1 oder 2, weiterhin enthaltend einen Deckel (51), welcher das Loch verschließt, wenn die Aufzeichnungsbandkassette nicht in eine Antriebseinrichtung (70) geladen ist.

7. Aufzeichnungsbandkassette nach Anspruch 1 oder 2, bei der in der Bandführung (48) Nuten (68) ausgebildet sind.

8. Aufzeichnungsbandkassette nach Anspruch 1 oder 2, bei der die Bandführung (48) in Form einer Trommel ausgebildet ist.

## Revendications

1. Cartouche de bande d'enregistrement, comprenant :
un boîtier (12) dans lequel une seule bobine (20) ayant un moyeu (22) autour duquel une bande d'enregistrement (T) est enroulée, est logée de manière rotative ;
une ouverture (18) formée dans le boîtier (12), à partir de laquelle un élément d'attaque (30) fixé à l'extrémité de la bande d'enregistrement (T) est tiré,
un guide de bande (48) avec lequel la bande d'enregistrement vient en contact de manière coulissante au moins lorsque l'élément d'attaque est tiré par l'ouverture, prévue dans le boîtier (12), un centre du guide de bande (48) dans le sens de sa largeur étant positionné à la même hauteur qu'un centre du moyeu (22) dans le sens de sa largeur, comme observé sur une vue latérale,
une unité d'ajustement de position adaptée pour déplacer le guide de bande (48) à la même hauteur que la bobine (20), conjointement à la bobine, l'unité d'ajustement de position comprenant : un élément de poussée (47) qui pousse le guide de bande (48) vers une plaque de plancher (16A) du boîtier (12), et un trou (17) qui est percé à travers la plaque de plancher (16A) du boîtier (12), ledit trou étant adapté pour recevoir un élément de mise en prise (71) d'un dispositif de lecture (70), qui pénètre dans le trou et déplace le guide de bande (48) vers une plaque de plafond (14A) du boîtier (12) contre une force de poussée de l'élément de poussée (47),
un pivot (46) faisant perpendiculairement saillie de la plaque de plancher (16A) du boîtier (12), le guide de bande (48) étant monté de manière rotative sur ledit pivot (46),
**caractérisée en ce que** ledit trou est percé à travers la plaque de plancher, pas de manière coaxiale avec le guide de bande (48), afin de recouvrir les rebords (48A, 48B) formés au niveau des extrémités dans le sens de la largeur du guide de bande (48), sur une vue en plan, le guide de bande (48) étant adapté pour être déplacé par l'élément de mise en prise (71) vers la plaque de plafond du boîtier (12) via lesdits rebords (48A, 48B), **en ce que** ledit pivot (46) est formé comme un corps solide.

2. Cartouche de bande d'enregistrement selon la revendication 1, dans laquelle le guide de bande a sensiblement la même hauteur que l'intérieur dudit boîtier (12).

3. Cartouche de bande d'enregistrement selon la revendication 1 ou 2, dans laquelle le guide de bande (48) est sensiblement formé selon une forme de cylindre ayant des rebords (48A, 48B) au niveau de ses deux extrémités dans le sens de la largeur et est configuré pour pouvoir tourner conjointement au contact coulissant avec la bande d'enregistrement.

4. Cartouche de bande d'enregistrement selon la revendication 1 ou 2, dans laquelle une largeur du guide de bande est inférieure à celle du moyeu.

5. Cartouche de bande d'enregistrement selon la revendication 3, dans laquelle une largeur du guide de bande est inférieure à celle du moyeu.

6. Cartouche de bande d'enregistrement selon la revendication 1 ou 2, comprenant en outre un couvercle (51) qui ferme le trou lorsque la cartouche de bande d'enregistrement n'est pas chargée dans un dispositif de lecture (70).

7. Cartouche de bande d'enregistrement selon la revendication 1 ou 2, dans laquelle les rainures (68) sont formées dans le guide de bande (48).

8. Cartouche de bande d'enregistrement selon la revendication 1 ou 2, dans laquelle le guide de bande (48) est formé selon une forme de tambour.
